**Europäisches Patentamt**

**European Patent Office**

**Office européen des brevets**

(19)

(11) Veröffentlichungsnummer : **0 348 472 B1**

(12) # EUROPÄISCHE PATENTSCHRIFT

(45) Veröffentlichungstag der Patentschrift :
**02.12.92 Patentblatt 92/49**

(51) Int. Cl.⁵ : **B60Q 7/00,** G09F 13/16

(21) Anmeldenummer : **89900568.0**

(22) Anmeldetag : **05.01.89**

(86) Internationale Anmeldenummer :
**PCT/CH89/00001**

(87) Internationale Veröffentlichungsnummer :
**WO 89/06200 13.07.89 Gazette 89/15**

(54) **PANNEN-SIGNALVORRICHTUNG.**

(30) Priorität : **07.01.88 CH 42/88**

(43) Veröffentlichungstag der Anmeldung :
**03.01.90 Patentblatt 90/01**

(45) Bekanntmachung des Hinweises auf die
Patenterteilung :
**02.12.92 Patentblatt 92/49**

(84) Benannte Vertragsstaaten :
**AT BE CH DE FR GB IT LI LU NL SE**

(56) Entgegenhaltungen :
**DE-A- 1 803 503
DE-A- 2 255 589
DE-B- 1 199 165**

(56) Entgegenhaltungen :
**DE-C- 879 816
US-A- 2 238 683
US-A- 3 908 221
US-A- 4 182 063
US-A- 4 194 313**

(73) Patentinhaber : **MÄTZENER, Jörg
Hch. Bosshardtstrasse 6
CH-8051 Zürich (CH)**

(72) Erfinder : **MÄTZENER, Jörg
Hch. Bosshardtstrasse 6
CH-8051 Zürich (CH)**

(74) Vertreter : **Petschner, Goetz
Patentanwaltsbüro G. Petschner
Wannenstrasse 16
CH-8800 Thalwil (CH)**

EP 0 348 472 B1

**Beschreibung**

Die vorliegende Erfindung betrifft eine Pannen-Signalvorrichtung.

Der Stand der Technik kennt sogenannte Pannen-Dreiecke, welche temporäre Hindernisse, wie Pannen-Fahrzeuge, Durchführungsarbeiten für Bau und Vermessung u.a. vorwarnen sollen.

Nachteilig bei solchen Pannen-Dreiecken ist u.a. deren oft recht umständliches Zusammenbauen, deren geringe Standfestigkeit und deren mangelhafte Signalwirkung infolge kleiner Fläche und senkrechten Stand, was eine Abdeckung durch Lichtschatten begünstigt. Gerade nachts sind dann solche Pannen-Dreiecke kaum wahrzunehmen.

Aufgabe der vorliegenden Erfindung ist nun die Schaffung einer, im Sinne von Pannen-Dreiecken verwendbaren Pannen-Signalvorrichtung, welche augenblicklich aufstellbar ist, welche eine grösstmöglichste Signalwirkung besitzt und welche geeignet ist, eine wirksame Absperrung und Hindernismarkierung darzustellen.

Dies wird erfindungsgemäss zunächst erreicht durch eine Mehrzahl wenigstens angenähert dreieckförmiger Signaltafeln, welche untereinander über Anschlusskanten gelenkig miteinander verbunden sind, um bei Nichtgebrauch deckungsgleich aufeinanderzuliegen und im Gebrauch durch zickzackförmiges Auseinanderziehen eine zaunartige Absperrung zu bilden.

Ansich können diese Signaltafeln aus beliebigem Material bestehen und die gelenkige Verbindung zwischen diesen durch Scharniere hergestellt werden.

Vorzugsweise ist jedoch die Ausbildung so, dass die Signaltafeln aus Kunststoff bestehen, deren Anschlusskanten durch Filmscharniere miteinander verbunden sind.

Eine zweckmässige Herstellung ergibt sich dabei dann, wenn die einen Anschlusskanten in der Abwicklung der Vorrichtung durch Ueberlappung von sich gegenüberliegenden Spitzen benachbarter Signaltafeln gebildet sind.

Je nach Ländervorschriften und Gebrauchszweck ist es notwendig, dass die Signaltafeln rechtwinklige, gleichschenklige oder ungleichschenklige Dreiecke sind.

Ferner besteht eine vorteilhafte Ausgestaltung darin, dass sowohl die Hypotenuse als auch die zwischen den Anschlusskanten liegende Kathete der dreieckförmigen Signaltafeln als Stellkanten dienen. Dies erlaubt, dass die Signaltafeln im Gebrauchszustand unterschiedliche Neigung aufweisen können, indem die Tafeln beim Abstellen auf deren Hypotenuse eine Neigung nach hinten einnehmen, wogegen im Falle der Katheten als Stellkanten die Signaltafeln eher senkrecht stehen.

Eine beispielsweise Ausführungsform des Erfindungsgegenstandes ist nachfolgend anhand der Zeichnung näher erläutert. Es zeigen:

Fig. 1 in schaubildartiger Darstellung die erfindungsgemässe Pannen-Signalvorrichtung in Gebrauchslage;

Fig. 2 eine Abwicklung der Pannen-Signalvorrichtung gemäss Fig. 1; und

Fig. 3 ausschnittweise und in grösserem Massstab eine gelenkige Verbindung zwischen den Anschlusskanten zweier benachbarter Signaltafeln der Anordnung gemäss Fig. 2.

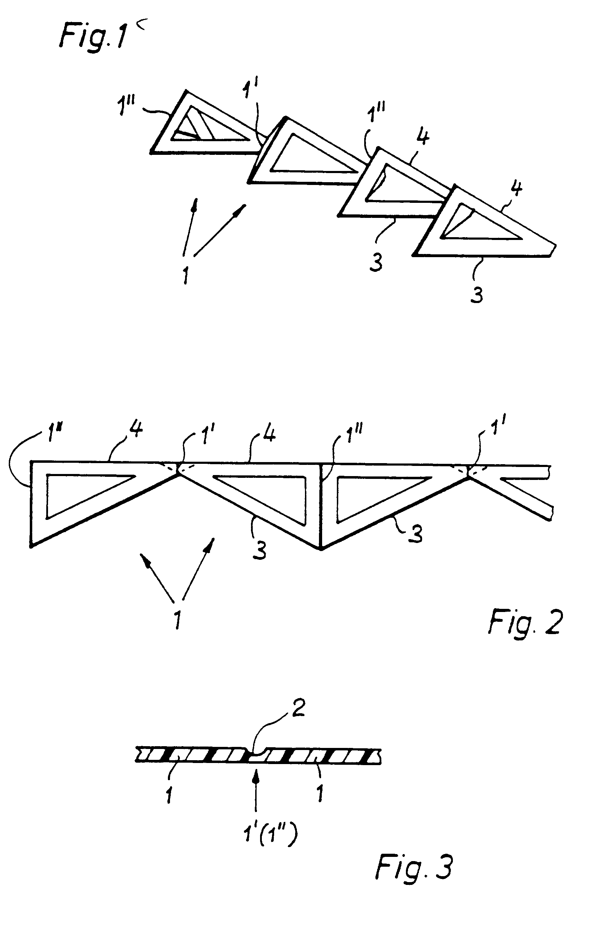

Die in Fig. 1 in Gebrauchslage gezeigte Pannen-Signalvorrichtung bildet eine, durch zickzackförmiges Auseinanderziehen von etwa dreieckförmigen, untereinander über Anschlusskanten gelenkig miteinander verbundenen Signaltafeln 1 herstellbare zaunartige Absperrung, deren räumliche Ausdehnung von der Grösse und der Anzahl zusammengefügter Signaltafeln abhängt, was ansich beliebig sein kann.

Bei Nichtgebrauch können dann die Signaltafeln deckungsgleich aufeinandergeklappt und so leicht behändigt und versorgt werden (nicht gezeigt).

Vorzugsweise bestehen die Signaltafeln 1 aus einem geeigneten Kunststoff, deren Anschlusskanten 1' resp. 1" durch Filmscharniere 2 (Fig. 3) verbunden sind.

Wie Fig. 2 mehr im Einzelnen zeigt, werden hierbei die einen Anschlusskanten 1' in der Abwicklung der Pannen-Signalvorrichtung durch Ueberlappen der sich gegenüberliegenden Spitzen benachbarter Signaltafeln 1 gebildet. Die anderen Anschlusskanten 1" bilden die der betreffenden Spitzen der Signaltafeln 1 gegenüberliegenden Katheten.

Die hier dargestellten Signaltafeln 1 sind rechtwinklige, ungleichschenklige Dreiecke.

Aus Fig. 1 ist zu entnehmen, dass hier die Pannen-Signalvorrichtung auf den Hypotenusen 3 der Signaltafeln 1 abgestellt ist, was den Signaltafeln eine Neigung nach hinten vermittelt und diese so erkennbarer Licht reflektieren können.

Ebenso kann aber auch die Pannen-Signalvorrichtung auf den, zwischen den Anschlusskanten 1' und 2' liegenden Katheten 4 der Signaltafeln 1 abgestellt werden (nicht gezeigt).

Aus dem Vorbeschriebenen ergibt sich somit eine Pannen-Signalvorrichtung von optimaler Signalwirkung, vielseitiger Verwendbarkeit sowie leichter Handhabung und Herstellung, womit der Gebrauchs- und Sicherheitswert vergleichsweise den üblichen Pannendreiecken um ein Mehrfaches verbessert erscheint.

Hierbei sind eine Anzahl Modifikationen an der vorbeschriebenen Pannen-Signalvorrichtung denkbar, ohne dabei den Erfindungsgedanken zu verlassen. So kann etwa die Fläche der Signaltafeln ohne Ausnehmung sein und als Informationsträger dienen u.a.

Weiter kann es von Bedeutung sein, die einzelnen Signaltafeln durch andere Scharniermittel anstelle der Filmscharniere zu verbinden, beispielsweise durch angeflanschte, gegebenenfalls gelinkig durch Gelenkstifte zusammensteckbare Scharniermittel (nicht gezeigt).

Gegebenenfalls ist es auch möglich, eine zollstockartig ausfaltbare Bodenleiste mit Lochung zum jeweiligen Aufstocken einer mit Steckstiften versehenen Signaltafel vorzusehen (nicht gezeigt), oder die Signaltafeln bodenseitig durch ausfaltbare Gelenkprofile zu verbinden (nicht gezeigt).

**Patentansprüche**

1. Pannen-Signalvorrichtung, gekennzeichnet durch eine Mehrzahl wenigstens angenähert dreieckförmiger Signaltafeln (1), welche untereinander über Anschlusskanten (1', 1″) gelenkig miteinander verbunden sind, um bei Nichtgebrauch deckungsgleich aufeinanderzuliegen und im Gebrauch durch zickzackförmiges Auseinanderziehen eine zaunartige Absperrung zu bilden.

2. Pannen-Signalvorrichtung nach Anspruch 1, dadurch gekennzeichnet, dass die Signaltafeln (1) aus Kunststoff bestehen, deren Anschlusskanten (1', 1″) durch Filmscharniere (2) miteinander verbunden sind.

3. Pannen-Signalvorrichtung nach Anspruch 1, dadurch gekennzeichnet, dass die einen Anschlusskanten (1') in der Abwicklung der Vorrichtung durch Ueberlappung von sich gegenüberliegenden Spitzen benachbarter Signaltafeln gebildet sind.

4. Pannen-Signalvorrichtung nach Anspruch 3, dadurch gekennzeichnet, dass die Signaltafeln (1) rechtwinklige, gleichschenklige oder ungleichschenklige Dreiecke sind.

5. Pannen-Signalvorrichtung nach Anspruch 3 oder 4, dadurch gekennzeichnet, dass sowohl die Hypotenuse (3) als auch die zwischen den Anschlusskanten (1' resp. 1″) liegende Kathete (4) der dreieckförmigen Signaltafeln (1) als Stellkanten dienen.

6. Pannen-Signalvorrichtung nach Anspruch 1, dadurch gekennzeichnet, dass die Signaltafeln (1) durch angeflanschte Scharniermittel miteinander verbunden sind.

7. Pannen-Signalvorrichtung nach Anspruch 1, dadurch gekennzeichnet, dass die Signaltafeln (1) durch angeflanschte und zusammensteckbare Scharniermittel miteinander verbunden sind.

**Claims**

1. Breakdown signalling device, characterized by a plurality of at least approximately triangular signal panels (1), hingedly connected to each other via connecting edges (1', 1″) so that when not in use they congruently superimpose and when in use they can form a fence-like barrier by being deployed in a zigzag manner.

2. Breakdown signalling device according to Claim 1, characterized in that the signal panels (1) consist of platsic material and their connecting edges (1', 1″) are connected to each other by film hinges (2).

3. Breakdown signalling device according to Claim 1, characterized in that the connecting edges (1') in the development of the device are formed by the overlapping of oppositely lying points of neighboring signal panels.

4. Breakdown signalling device according to Claim 3, characterized in that the signal panels (1) are right-angled, isosceles or scalene triangles.

5. Breakdown signalling device according to Claim 3 or 4, characterized in that the hypotenuse (3) as well as the cathetus (4) lying between the connecting edges (1', resp. 1″) of the triangular signal panel (1) serve as positioning edges.

6. Breakdown signalling device according to Claim 1, characterized in that the signal panels (1) are connected to each other through flanged hinge means.

7. Breakdown signalling device according to Claim 1, characterized in that the signal panels (1) are connected to each other through flanged hinge means which can be stuck into each other.

**Revendications**

1. Dispositif de signalisation de détresse, caractérisé par plusieurs plaques de signalisation (1) de forme au moins approximativement triangulaire, qui sont reliées entre elles de manière articulée par des arêtes de jonction (1, 1″) pour reposer l'une sur l'autre par recouvrement en cas de non-utilisation et pour former en cas d'utilisation un barrage en palissade au moyen d'un déploiement en zig-zag.

2. Dispositif de signalisation de détresse selon la revendication 1, caractérisé en ce que les plaques de signalisation (1) sont en matière plastique, les arêtes de jonction (1', 1") de celles-ci étant reliées entre elles par des charnières pelliculaires (2).

3.  Dispositif de signalisation de détresse selon la revendication 1, caractérisé en ce que l'arête de jonction (1') dans le déroulement du dispositif est formée par chevauchement des pointes, se faisant face, des plaques de signalisation voisines.

4.  Dispositif de signalisation de détresse selon la revendication 3, caractérisé en ce que les plaques de signalisation (1) sont des triangles à angle droit, isocèles ou non isocèles.

5.  Dispositif de signalisation de détresse selon les revendications 3 ou 4, caractérisé en ce que l'hypothénuse (3) ainsi que le côté de l'angle droit (4) situé entre les arêtes de jonction (1' ou 1") des plaques de signalisation triangulaires (1) servent d'arête de pose.

6.  Dispositif de signalisation de détresse selon la revendication 1, caractérisé en ce que les plaques de signalisation (1) sont reliées les unes aux autres par des moyens à charnières bridés.

7.  Dispositif de signalisation de détresse selon la revendication 1, caractérisé en ce que les plaques de signalisation (1) sont reliées les unes aux autres par des moyens à charnières bridées et assemblables.

Fig.1

Fig. 2

Fig. 3